# EUROPEAN PATENT APPLICATION

(11) **EP 4 668 950 A1**
(43) Date of publication of application: **24.12.2025**
(21) Application number: 23922030.4
(22) Date of filing: 17.02.2023
(51) Int. Cl.: H04W 72/0453

(54) **COMMUNICATION METHOD AND APPARATUS, AND STORAGE MEDIUM**

(71) Applicant: Beijing Xiaomi Mobile Software Co., Ltd., Beijing 100085 (CN)
(72) Inventor: MU, Qin, Beijing 100085 (CN)
(74) Representative: Dehns Germany Partnerschaft mbB
(86) International application number: PCT/CN2023/076966
(87) International publication number: WO 2024/168899

(57) **Abstract**

The present disclosure relates to the technical field of communications, and relates to a communication method and apparatus and a storage medium, which are used for improving the reliability of a transmission channel/signal. The method comprises: in response to determining that the bandwidth configured by a network device to a control resource set is greater than the system bandwidth, determining available resources of the system bandwidth and/or the control resource set, wherein the available resources of the control resource set represent resources in the control resource set for transmitting a physical downlink control channel (PDCCH).

## Description

### TECHNICAL FIELD

The present disclosure relates to the technical field of communication, and in particular, to a communication method, apparatus and storage medium.

### BACKGROUND

In the New Radio (NR) system, when the terminal needs to transmit the Physical Downlink Control Channel (PDCCH), the PDCCH is transmitted through the Control Resource Set (CORESET).

At present, it is considered to support NR technology in frequency bands with relatively small system bandwidth supported by terminals. However, due to the small system bandwidth, the system bandwidth cannot carry all the transmission resources contained in the control resource set. Therefore, when the terminal performs transmission processing of PDCCH, it cannot determine which resources in the control resource set can be used to transmit PDCCH.

### SUMMARY

In order to overcome the problems existing in the related art, the present disclosure provides a communication method, apparatus and storage medium.

According to a first aspect of embodiments of the present disclosure, a communication method is provided, which is performed by a terminal and includes:
in response to determining that a bandwidth configured by a network device for a control resource set is greater than a system bandwidth, determining an available resource of the system bandwidth and/or an available resource of the control resource set; where the available resource of the control resource set represents a resource in the control resource set used for transmitting a physical downlink control channel (PDCCH).

In one implementation, determining the available resource of the control resource set and/or the available resource of the system bandwidth includes:
determining the available resource of the system bandwidth and/or the available resource of the control resource set based on a first frequency band bandwidth, where the first frequency band bandwidth is determined based on a frequency band bandwidth corresponding to a frequency band in which the terminal operates.

In one implementation, determining the available resource of the system bandwidth and/or the available resource of the control resource set based on the first frequency band bandwidth includes:
determining the system bandwidth based on a position of a synchronization signal block (SSB) and the first frequency band bandwidth; and/or
determining the available resource of the control resource set based on the position of the SSB, the first frequency band bandwidth and a starting position of the control resource set, where the starting position of the control resource set is determined based on a master information block (MIB).

In one implementation, the method further comprises:
determining an initial downlink bandwidth part based on the available resource of the system bandwidth or the available resource of the control resource set, where the initial downlink bandwidth part is used to transmit a downlink channel/signal.

In one implementation, the initial downlink bandwidth part is the system bandwidth.

In one implementation, a bandwidth corresponding to the available resource of the control resource set is smaller than the system bandwidth, and the initial downlink bandwidth part is a bandwidth corresponding to the available resource of the control resource set.

In one implementation, a frequency band bandwidth corresponding to a frequency band in which the terminal operates is a fixed bandwidth, and a first frequency band bandwidth is the frequency band bandwidth corresponding to the frequency band in which the terminal operates.

In one implementation, the frequency band bandwidth corresponding to the frequency band in which the terminal operates is greater than or equal to a first threshold and less than or equal to a second threshold, and the first threshold is less than the second threshold;
a first frequency band bandwidth is the first threshold.

In one implementation, the method further includes:
in response to determining that the network device performs rate matching and resource mapping based on the first frequency band bandwidth, receiving a downlink channel/signal based on the first frequency band bandwidth.

In one implementation, the method further includes:
in response to determining that the network device performs rate matching and resource mapping according to an allocated resource corresponding to a downlink channel/signal, receiving the downlink channel/signal based on the first frequency band bandwidth, and filling a transmission symbol mapped outside the first frequency band bandwidth.

In one implementation, the method further includes:
in response to determining that the network device performs rate matching according to an allocated resource corresponding to a downlink channel/signal and performs resource mapping based on the first frequency band bandwidth, receiving the downlink channel/signal based on the first frequency band bandwidth, and filling a transmission symbol mapped outside the first frequency band bandwidth.

According to a second aspect of the embodiments of the present disclosure, a communication method is provided, which is performed by a network device and includes:
configuring a bandwidth of a control resource set, where the bandwidth of the control resource set is greater than a system bandwidth, the bandwidth of the control resource set is used to determine an available resource of the system bandwidth and/or an available resource of the control resource set, and the available resource of the control resource set represents a resource in the control resource set used for transmitting a physical downlink control channel (PDCCH).

In one implementation, the available resource of the system bandwidth and/or an available resource of the control resource set is determined based on a first frequency band bandwidth, and the first frequency band bandwidth represents a frequency band bandwidth corresponding to a frequency band in which the terminal operates.

In one implementation, the system bandwidth is determined based on a position of a synchronization signal block (SSB) and the first frequency band bandwidth; and/or
the available resource of the control resource set is determined based on the position of the SSB, the first frequency band bandwidth and a starting position of the control resource set.

In one implementation, the available resource of the system bandwidth and/or the available resource of the control resource set is used to determine an initial downlink bandwidth part, and the initial downlink bandwidth part is used to transmit a downlink channel/signal.

In one implementation, a bandwidth corresponding to the available resource of the control resource set is smaller than the system bandwidth, and the initial downlink bandwidth part is a bandwidth corresponding to the available resource of the control resource set.

In one implementation, a frequency band bandwidth corresponding to a frequency band in which the terminal operates is a fixed bandwidth, and a first frequency band bandwidth is the frequency band bandwidth corresponding to the frequency band in which the terminal operates.

In one implementation, the frequency band bandwidth corresponding to the frequency band in which the terminal operates is greater than or equal to a first threshold and less than or equal to a second threshold, and the first threshold is less than the second threshold;
ae first frequency band bandwidth is the first threshold.

In one implementation, the method further includes:
performing rate matching and resource mapping based on the first frequency band bandwidth;
sending a downlink channel/signal based on the first frequency band bandwidth.

In one implementation, the method further includes:
performing rate matching and resource mapping according to an allocated resource corresponding to the downlink channel/signal;
sending the downlink channel/signal based on the first frequency band bandwidth, and discarding a transmission symbol mapped outside the first frequency band bandwidth.

In one implementation, the method further includes:
performing rate matching according to an allocated resource corresponding to the downlink channel/signal and performing resource mapping based on the first frequency band bandwidth;
sending the downlink channel/signal based on the first frequency band bandwidth, and discarding a transmission symbol mapped outside the first frequency band bandwidth.

According to a third aspect of the embodiments of the present disclosure, a communication apparatus is provided, the apparatus including:
a determination module, configured to, in response to determining that a bandwidth configured by a network device for a control resource set is greater than a system bandwidth, determine an available resource of the system bandwidth and/or an available resource of the control resource set; where the available resource of the control resource set represents a resource in the control resource set used for actually transmitting a physical downlink control channel (PDCCH).

In one implementation, the determination module is configured to determine the available resource of the system bandwidth and/or the available resource of the control resource set based on a first frequency band bandwidth, where the first frequency band bandwidth is determined based on a frequency band bandwidth corresponding to a frequency band in which the terminal operates.

In one implementation, the determination module is configured to determine the system bandwidth based on a position of a synchronization signal block (SSB) and the first frequency band bandwidth; and/or
determine the available resource of the control resource set based on the position of the SSB, the first frequency band bandwidth and a starting position of the control resource set, where the starting position of the control resource set is determined based on a master information block (MIB).

In one implementation, the determination module is configured to determine an initial downlink bandwidth part based on the available resource of the system bandwidth or the available resource of the control resource set, where the initial downlink bandwidth part is used to transmit a downlink channel/signal.

In one implementation, the initial downlink bandwidth part is the system bandwidth.

In one implementation, a bandwidth corresponding to the available resource of the control resource set is smaller than the system bandwidth, and the initial downlink bandwidth part is a bandwidth corresponding to the available resource of the control resource set.

In one implementation, a frequency band bandwidth corresponding to frequency band in which the terminal operates is a fixed bandwidth, and a first frequency band bandwidth is the frequency band bandwidth corresponding to the frequency band in which the terminal operates.

In one implementation, the frequency band bandwidth corresponding to the frequency band in which the terminal operates is greater than or equal to a first threshold and less than or equal to a second threshold, and the first threshold is less than the second threshold;
a first frequency band bandwidth is the first threshold.

In one implementation, the receiving module is configured to, in response to determining that the network device performs rate matching and resource mapping based on the first frequency band bandwidth, receive a downlink channel/signal based on the first frequency band bandwidth.

In one implementation, the receiving module is configured to:
in response to determining that the network device performs rate matching and resource mapping according to an allocated resource corresponding to a downlink channel/signal, receive the downlink channel/signal based on the first frequency band bandwidth;
a filling module is configured to fill a transmission symbol mapped outside the first frequency band bandwidth.

In one implementation, the receiving module is configured to, in response to determining that the network device performs rate matching according to an allocated resource corresponding to a downlink channel/signal and performs resource mapping based on the first frequency band bandwidth, receive the downlink channel/signal based on the first frequency band bandwidth;
a filling module is configured to fill a transmission symbol mapped outside the first frequency band bandwidth.

According to a fourth aspect of the embodiments of the present disclosure, a communication apparatus is provided, the apparatus including:
a configuration module, configured to configure a bandwidth of a control resource set, where the bandwidth of the control resource set is greater than a system bandwidth, the bandwidth of the control resource set is used to determine an available resource of the system bandwidth and/or an available resource of the control resource set, and the available resource of the control resource set represents a resource in the control resource set used to transmit a physical downlink control channel (PDCCH).

In one implementation, the available resource of the system bandwidth and/or the available resource of the control resource set is determined based on a first frequency band bandwidth, and the first frequency band bandwidth represents a frequency band bandwidth corresponding to a frequency band in which the terminal operates.

In one implementation, the system bandwidth is determined based on a position of a synchronization signal block (SSB) and the first frequency band bandwidth; and/or
the available resource of the control resource set is determined based on the position of the SSB, the first frequency band bandwidth and a starting position of the control resource set.

In one implementation, the available resource of the system bandwidth and/or the available resource of the control resource set is used to determine an initial downlink bandwidth part, and the initial downlink bandwidth part is used to transmit a downlink channel/signal.

In one implementation, a bandwidth corresponding to the available resource of the control resource set is smaller than the system bandwidth, and the initial downlink bandwidth part is a bandwidth corresponding to the available resource of the control resource set.

In one implementation, a frequency band bandwidth corresponding to a frequency band in which the terminal operates is a fixed bandwidth, and a first frequency band bandwidth is the frequency band bandwidth corresponding to the frequency band in which the terminal operates.

In one implementation, the frequency band bandwidth corresponding to the frequency band in which the terminal operates is greater than or equal to a first threshold and less than or equal to a second threshold, and the first threshold is less than the second threshold;
a first frequency band bandwidth is the first threshold.

In one implementation, the processing module is configured to perform rate matching and resource mapping based on the first frequency band bandwidth;
a sending module is configured to send a downlink channel/signal based on the first frequency band bandwidth.

In one implementation, the processing module is configured to perform rate matching and resource mapping according to an allocated resource corresponding to a downlink channel/signal; send the downlink channel/signal based on the first frequency band bandwidth, and discard a transmission symbol mapped outside the first frequency band bandwidth.

In one implementation, the processing module is configured to perform rate matching according to an allocated resource corresponding to a downlink channel/signal and perform resource mapping based on the first frequency band bandwidth;
the sending module is configured to send the downlink channel/signal based on the first frequency band bandwidth and discard a transmission symbol mapped outside the first frequency band bandwidth.

According to a fifth aspect of the embodiments of the present disclosure, a communication apparatus is provided, including: a processor; and a memory for storing instructions executable by the processor; where the processor is configured to: execute the method described in the above-mentioned first aspect or any one of the implementations of the first aspect.

According to a sixth aspect of the embodiments of the present disclosure, a communication apparatus is provided, including: a processor; and a memory for storing instructions executable by the processor; where the processor is configured to: execute the method described in the above second aspect or any one of the implementations of the second aspect.

According to a seventh aspect of the embodiments of the present disclosure, a storage medium is provided, in which instructions are stored. When the instructions in the storage medium are executed by a processor of a terminal device, the method described in the first aspect or any one of the implementations of the first aspect can be executed.

According to an eighth aspect of the embodiments of the present disclosure, a storage medium is provided, in which instructions are stored. When the instructions in the storage medium are executed by a processor of a network device, the network device is enabled to execute the method described in the second aspect or any one of the implementations of the second aspect.

According to a ninth aspect of the embodiments of the present disclosure, a communication system is provided, including a terminal and a network device, where the terminal is configured to perform the method described in the above-mentioned first aspect and any one of the implementations of the first aspect; and the network device is configured to perform the method described in the above-mentioned second aspect and any one of the implementations of the second aspect.

The technical solutions provided by the embodiments of the present disclosure may include the following beneficial effects: in the case that the bandwidth configured by the network device for the control resource set is greater than the system bandwidth, the terminal determines the available resource of the system bandwidth and/or the available resource of the control resource set; where the available resource of the control resource set represents the resource in the control resource set used for actually transmitting the physical downlink control channel. Therefore, the terminal can receive the PDCCH based on the available resource of the control resource set, thereby improving the transmission reliability of the PDCCH. In addition, the terminal can obtain the system bandwidth before receiving the PDCCH, thereby performing good processing on the downlink channels/signals such as the PDCCH based on the system bandwidth.

It is to be understood that the foregoing general description and the following detailed description are exemplary and explanatory only and are not restrictive of the present disclosure.

### BRIEF DESCRIPTION OF THE DRAWINGS

The accompanying drawings, which are incorporated in and constitute a part of this specification, illustrate the embodiments consistent with the present disclosure and, together with the specification, serve to explain the principles of the present disclosure.
FIG. 1 is a schematic diagram of a wireless communication system according to an exemplary embodiment.
FIG. 2 is a flowchart showing a communication method according to an exemplary embodiment.
FIG. 3 is a flowchart showing a communication method according to an exemplary embodiment.
FIG. 4 is a flowchart showing a communication method according to an exemplary embodiment.
FIG. 5 is a flowchart showing a communication method according to an exemplary embodiment.
FIG. 6 is a flowchart showing a communication method according to an exemplary embodiment.
FIG. 7 is a flowchart showing a communication method according to an exemplary embodiment.
FIG. 8 is a flowchart showing a communication method according to an exemplary embodiment.
FIG. 9 is a flowchart showing a communication method according to an exemplary embodiment.
FIG. 10 is a flowchart showing a communication method according to an exemplary embodiment.
FIG. 11 is a flowchart showing a communication method according to an exemplary embodiment.
FIG. 12 is a flowchart showing a communication method according to an exemplary embodiment.
FIG. 13 is a flowchart showing a communication method according to an exemplary embodiment.
FIG. 14 is a block diagram showing a communication apparatus according to an exemplary embodiment.
FIG. 15 is a block diagram showing a communication apparatus according to an exemplary embodiment.
FIG. 16 is a block diagram showing a communication apparatus according to an exemplary embodiment.
FIG. 17 is a block diagram showing a communication apparatus according to an exemplary embodiment.

### DETAILED DESCRIPTION

Here, exemplary embodiments will be described in detail, examples of which are shown in the accompanying drawings. When the following description refers to the drawings, unless otherwise indicated, the same numbers in different drawings represent the same or similar elements. The implementations described in the following exemplary embodiments do not represent all implementations consistent with the present disclosure.

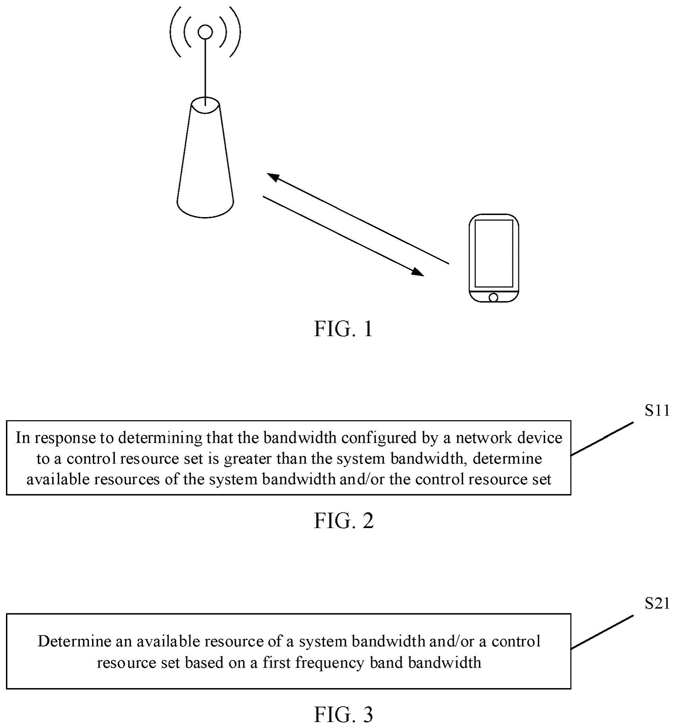

The communication method involved in the present disclosure can be applied to the wireless communication system shown in FIG. 1. The network system may include a network device and a terminal. It is understandable that the wireless communication system shown in FIG. 1 is only for schematic illustration, and the wireless communication system may also include other network devices, such as core network devices, wireless relay devices, and wireless backhaul devices, which are not shown in FIG. 1. The embodiments of the present disclosure do not limit the number of network devices and terminals included in the wireless communication system.

It can be further understood that the wireless communication system of the embodiments of the present disclosure is a network that provides wireless communication functions. The wireless communication system can adopt different communication technologies, such as Code Division Multiple Access (CDMA), Wideband Code Division Multiple Access (WCDMA), Time Division Multiple Access (TDMA), Frequency Division Multiple Access (FDMA), Orthogonal Frequency-Division Multiple Access (OFDMA), Single Carrier FDMA (SC-FDMA), and Carrier Sense Multiple Access with Collision Avoidance. According to the capacity, rate, delay and other factors of different networks, networks can be divided into 2G (English: Generation) networks, 3G networks, 4G networks or future evolution networks, such as the 5th Generation Wireless Communication System (5G) network. 5G networks can also be called New Radio (NR). For the convenience of description, the present disclosure sometimes refers to wireless communication networks as networks.

Furthermore, the network device involved in the present disclosure may also be referred to as a wireless access network device. The wireless access network device may be: a base station, an evolved Node B (eNB), a home base station, an access point (AP) in a wireless fidelity (WIFI) system, a wireless relay node, a wireless backhaul node, a transmission point (TP) or a transmission and receiving point (TRP), etc. It may also be a gNB in an NR system, or it may also be a component or a part of a device constituting the base station, etc. When it is a vehicle-to-everything (V2X) communication system, the network device may also be a vehicle-mounted device. It should be understood that in the embodiments of the present disclosure, the specific technology and specific device form adopted by the network device are not limited.

Furthermore, the terminal involved in the present disclosure may also be referred to as a terminal device, a user equipment (UE), a mobile station (MS), a mobile terminal (MT), etc., which is a device that provides voice and/or data connectivity to users. For example, the terminal may be a handheld device with a wireless connection function, a vehicle-mounted device, etc. At present, some examples of terminals are: a smart phone, a pocket computer (Pocket Personal Computer, PPC), a handheld computer, a personal digital assistant (PDA), a laptop computer, a tablet computer, a wearable device, or a vehicle-mounted device, etc. In addition, when it is a vehicle-to-everything (V2X) communication system, the terminal device may also be a vehicle-mounted device. It should be understood that the embodiments of the present disclosure do not limit the specific technology and specific device form adopted by the terminal.

In the embodiments of the present disclosure, the network device and the terminal can use any feasible wireless communication technology to achieve mutual data transmission. The transmission channel corresponding to the network device sending data or control information to the terminal is called a downlink channel (downlink, DL), and the transmission channel corresponding to the terminal sending data or control information to the network device is called an uplink channel (uplink, UL). It can be understood that the network device involved in the embodiments of the present disclosure may be a base station. The network device may also be any other possible network device, and the terminal may be any possible terminal, which is not limited by the present disclosure.

In the New Radio (NR) system, when the terminal needs to transmit the Physical Downlink Control Channel (PDCCH), the PDCCH is transmitted through the Control Resource Set (CORESET).

It can be understood that the transmission channel involved in the present disclosure can be understood as transmitting corresponding data on corresponding time domain and frequency domain resources, and the data path formed by transmitting the data is the above-mentioned channel. For example, the network device transmits downlink control information on corresponding time domain and frequency domain resources, thereby forming a data path for transmitting downlink control information. The data path is the physical downlink control channel (PDCCH). Then the transmission of the downlink control information can also be interpreted as the transmission of PDCCH.

The control resource set includes multiple control resource set types, and different control resource set types can be used to transmit different channels/signals. Control resource set 0 is used to transmit the physical downlink control channel (PDCCH).

The frequency domain resource occupied by control resource set 0 is indicated by the Master Information Block (MIB). As shown in Table 1, the MIB includes the following information fields.

**Table 1**

| Information field | Function | Number of bits |
|---|---|---|
| System frame number | Indicate high 6 bits of the | 6 |
| (systemFrameNumber) | system frame number, and low 4 bits are indicated through a scrambling sequence | |
| Subcarrier spacing (subCarrierSpacingCommon) | Indicate a parameter used in current frequency band | 1 |
| SSB subcarrier offset (SSB-SubcarrierOffset) | Indicate subcarrier offset of synchronous broadcast block | 4 |
| DMRS symbol position during type A PDSCH mapping (dmrs-TypeA-Position) | Indicate a time-domain symbol position of the preceding DMRS when mapping TypeA PSCH resource | 1 |
| SIB1 configuration (PDCCH-ConfigSIB1) | Control resource set where PDCCH is located | 4 |
| | Search space set where PDCCH is located | 4 |
| Cell is barred for access (CellBarred) | Sign of whether the cell is barred for access | 1 |
| Intra-frequency cell reselection (intraFrqReselection) | When the cell is barred for access, the terminal attempts to access from other cell on the same frequency | 1 |
| Spare | 1 spare bit | 1 |

As shown in Table 1 above, the frequency domain resource of control resource set 0 is mainly determined based on the PDCCH-ConfigSIB1 information field indication. The PDCCH-ConfigSIB1 information field may indicate the number of resources of control resource set 0, the number of OFDM symbols occupied, and the offset equivalent to the first synchronization signal (Primary Synchronization Signal, PSS)/secondary synchronization signal (SSS), as shown in Table 2 below.

**Table 2**

| Index | Synchronization signal/physical broadcast channel and control resource set multiplexing pattern | Number of resources | Number of symbols | Offset |
|---|---|---|---|---|
| 0 | 1 | 24 | 2 | 0 |
| 1 | 1 | 24 | 2 | 2 |
| 2 | 1 | 24 | 2 | 4 |
| 3 | 1 | 24 | 3 | 0 |
| 4 | 1 | 24 | 3 | 2 |
| 5 | 1 | 24 | 3 | 4 |
| 6 | 1 | 48 | 1 | 12 |
| 7 | 1 | 48 | 1 | 16 |
| 8 | 1 | 48 | 2 | 12 |
| 9 | 1 | 48 | 2 | 16 |
| 10 | 1 | 48 | 3 | 12 |
| 11 | 1 | 48 | 3 | 16 |
| 12 | 1 | 96 | 1 | 38 |
| 13 | 1 | 96 | 2 | 38 |
| 14 | 1 | 96 | 3 | 38 |
| 15 | Reserved | | | |

The number of resources represents the number of frequency domain resources configured by the network device for control resource set 0, the number of symbols represents the number of time domain resources (OFDM symbols) configured by the network device for control resource set 0, and the offset represents the offset between the frequency domain resource corresponding to the current control resource set and the primary synchronization signal (PSS)/secondary synchronization signal (SSS). The frequency domain position of the control resource set can be determined based on the offset.

At present, it is considered that the frequency bands with relatively small system bandwidth supported by the terminal support NR technology. These frequency bands mainly provide services for special services such as special communications, public protection and disaster relief of power systems/railway systems in some countries and regions, such as frequency bands with band numbers n8, n26, n28 and n100. Generally, the system bandwidth supported by n8, n26 and n28 is 3MHz, and the system bandwidth supported by n100 is 2.8MHz to 3.6MHz. Due to the small system bandwidth supported, there are fewer resources that can be transmitted on these frequency bands, and the number of PRBs available is generally around 15. However, the minimum number of PRBs configured for the configuration of control resource set 0 in the related art is 24. In this case, the bandwidth of control resource set 0 configured by the network device is greater than the system bandwidth. Therefore, when the terminal performs transmission processing of PDCCH, it cannot know which resources in control resource set 0 can be used to transmit PDCCH, and thus cannot accurately receive PDCCH.

In one implementation, the initial uplink bandwidth part (initial DL BWP) is determined by control resource set 0, and the PDSCH resource allocation is performed in the initial DL BWP. When the bandwidth of control resource set 0 configured by the network device is greater than the system bandwidth, the system bandwidth needs to be determined first. However, the system bandwidth in the related art is carried in the system information block (SIB), and the terminal can obtain the system bandwidth only after demodulating the PDCCH. How to obtain the system bandwidth before demodulating the PDCCH is also a problem that needs to be determined.

Based on this, the embodiment of the present disclosure proposes a communication method, in the case that the bandwidth configured by the network device for the control resource set is greater than the system bandwidth, the terminal can determine the available resource of the system bandwidth and/or the control resource set; where the available resource of the control resource set represents the resource in the control resource set used for the actual transmission of the physical downlink control channel. Thus, the terminal can receive the PDCCH based on the available resource of the control resource set, thereby improving the transmission reliability of the PDCCH. Moreover, the terminal can obtain the system bandwidth before receiving the PDCCH, thereby performing good processing on the downlink channels/signals such as the PDCCH based on the system bandwidth.

FIG. 2 is a flowchart showing a communication method according to an exemplary embodiment. As shown in FIG. 2, the communication method is performed by a terminal and includes the following steps.

In step S11, in response to determining that a bandwidth configured by the network device for a control resource set is greater than a system bandwidth, an available resource of the system bandwidth and/or the control resource set is determined.

In one implementation, the control resource set is control resource set 0.

The available resource of the control resource set represents the resource(s) in the control resource set used for actually transmitting the PDCCH. This is because the bandwidth configured by the network device for the control resource set is greater than the system bandwidth, and the resources configured by the network device for the control resource set cannot all be carried in the system bandwidth. Only part of the resources configured by the network device for the control resource set are in the system bandwidth, that is, the resources that can actually transmit channels/signals. The resource(s) outside the system bandwidth cannot transmit channels/signals.

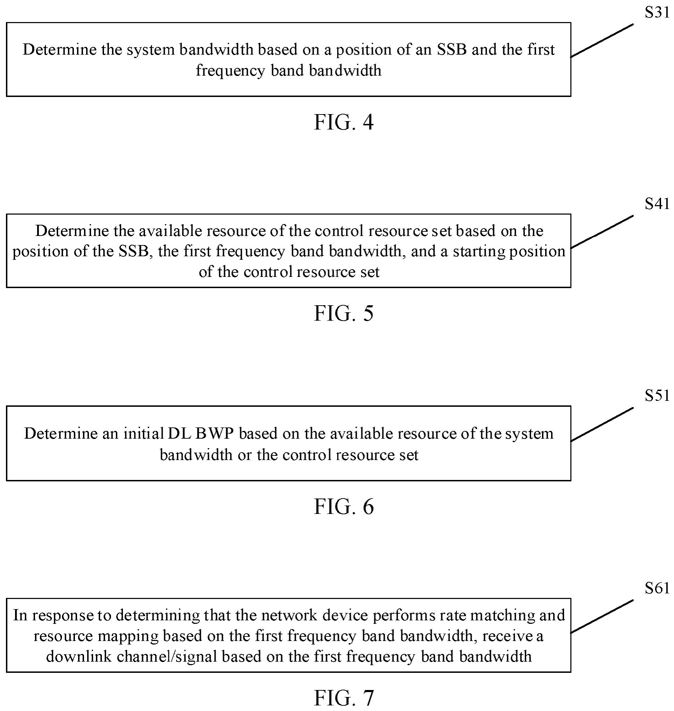

In some embodiments, the terminal can determine the available resource of the control resource set. The network device configures resources for the control resource set. When the system bandwidth is small, the resources configured by the network device for the control resource set cannot be fully carried in the system bandwidth. However, since the terminal cannot know the system bandwidth before receiving the PDCCH, the terminal cannot know which part of the resources of the control resource set is within the system bandwidth, that is, it cannot correctly receive the PDCCH. For example, the number of resources that can be transmitted in the system bandwidth is 15, and the number of resources configured by the network device for the control resource set is 24. The number of resources of the control resource set is greater than the number of resources that can be transmitted in the system bandwidth. It is necessary to determine which part of the 24 resources corresponding to the control resource set is within the system bandwidth. Therefore, when the bandwidth configured by the network device for the control resource set is greater than the system bandwidth, the terminal can determine the available resource(s) of the control resource set and receive the PDCCH based on the available resource(s). For how the terminal determines the available resource(s) of the control resource set, the embodiment shown in FIG. 5 is referred to.

In some embodiments, the terminal can determine the system bandwidth. The network device configures a transmission resource for the control resource set. When the system bandwidth is small, the resources configured by the network device for the control resource set cannot be fully carried in the system bandwidth. However, since the terminal cannot know the system bandwidth before receiving the PDCCH, the terminal cannot know which part of the resources of the control resource set is within the system bandwidth, that is, it cannot correctly receive the PDCCH. Therefore, when the bandwidth configured by the network device for the control resource set is greater than the system bandwidth, the terminal can determine the system bandwidth and determine the available resource(s) of the control resource set based on the system bandwidth. For how the terminal determines the available resource(s) of the control resource set, the embodiment shown in FIG. 4 below is referred to.

In some embodiments, the terminal can determine the available resource(s) of the control resource set and the system bandwidth. For details, please refer to the embodiments shown in FIGs. 4 and 5 below.

In some embodiments, the available resource(s) of the control resource set represents the number of PRBs in the control resource set that can actually be used to transmit the PDCCH.

In the embodiments of the present disclosure, when the bandwidth configured by the network device for the control resource set is greater than the system bandwidth, the terminal can determine the available resource(s) of the control resource set and/or the system bandwidth; where the available resource(s) of the control resource set represents the resource(s) in the control resource set used to transmit the physical downlink control channel. Thus, the terminal can receive the PDCCH based on the available resource(s) of the control resource set, thereby improving the transmission reliability of the PDCCH. Moreover, the terminal can obtain the system bandwidth before receiving the PDCCH, thereby performing good processing on the downlink channel/signal based on the system bandwidth.

In the communication method provided in the embodiment of the present disclosure, the terminal determines the available resource of the system bandwidth and/or the control resource set based on a preset rule. As shown in FIG. 3, the method includes the following steps.

In step S21, an available resource of a system bandwidth and/or a control resource set is determined based on a first frequency band bandwidth.

The first frequency band bandwidth indicates a frequency band bandwidth corresponding to a frequency band in which the terminal operates.

In the embodiments of the present disclosure, the terminal determines the available resource of the system bandwidth and/or the control resource set based on the frequency band bandwidth corresponding to the frequency band in which the terminal operates. The system bandwidth can be determined before demodulating the PDCCH, and the PDCCH can be received based on the available resource of the control resource set, thereby improving the transmission reliability of the PDCCH.

In a communication method provided in an embodiment of the present disclosure, the terminal determines the system bandwidth based on the following method. As shown in FIG. 4, the method includes the following steps.

In step S31, the system bandwidth is determined based on a position of an SSB and the first frequency band bandwidth.

In some embodiments, the system bandwidth is determined based on the lowest frequency point corresponding to the SSB and the bandwidth allocated to the NR system in the first frequency band bandwidth.

For example, the lowest frequency point corresponding to SSB is x, and the bandwidth allocated to the NR system in the first frequency band bandwidth is Y, then the system bandwidth is greater than or equal to x MHz and less than or equal to (x+Y) MHz. The system bandwidth is any value between x and x+Y, and the specific value of the system bandwidth is determined by the network device.

In a communication method provided in an embodiment of the present disclosure, the terminal determines the available resource of the control resource set based on the following method. As shown in FIG. 5, the method includes the following steps.

In step S41, the available resource of the control resource set is determined based on the position of the SSB, the first frequency band bandwidth, and a starting position of the control resource set.

Exemplarily, the lowest frequency point corresponding to SSB is x, the bandwidth allocated to the NR system in the first frequency band bandwidth is Y, and the starting position of the control resource set is Z, then the available resource of the control resource set is (x+Y-Z).

In some embodiments, the starting position of the control resource set indicates a resource position corresponding to the first (1^{st}) resource of the control resource set in the system bandwidth. The starting position of the control resource set is determined based on the MIB indication. The terminal determines the reference resource position and resource offset value of the control resource set based on the MIB indication, and determines the starting position based on the reference resource position and resource offset value. For example, the reference resource position is the N-th PRB, and the resource offset value is *a*, then the starting position is (N+*a*)-th PRB.

In the embodiments of the present disclosure, the terminal determines the available resource of the system bandwidth and/or the control resource set based on its own needs, so as to perform good processing on subsequent downlink channels/signals and ensure the transmission reliability of the downlink channels/signals.

In a communication method provided in the embodiment of the present disclosure, the terminal can determine an initial DL BWP based on the available resource of the system bandwidth or the control resource set, as shown in FIG. 6, including the following steps.

In step S51, the initial DL BWP is determined based on the available resource of the system bandwidth or the control resource set.

The initial DL BWP is used to transmit downlink channels/signals.

In some embodiments of a communication method provided by the embodiment of the present disclosure, the terminal determines the system bandwidth, and the initial DL BWP may be the system bandwidth.

In some other embodiments of a communication method provided by the embodiment of the present disclosure, the terminal determines the available resource of the system bandwidth and the control resource set, and in the case that the bandwidth corresponding to the available resource of the control resource set is smaller than the system bandwidth, the initial DL BWP is the bandwidth corresponding to the available resource of the control resource set.

The bandwidth corresponding to the available resource of the control resource set is less than or equal to the system bandwidth. In the embodiments of the present disclosure, the terminal can determine the initial DL BWP based on the available resource of the system bandwidth or the control resource set, so that the resource of PDSCH can be allocated in the initial DL BWP, so that the network device can transmit PDSCH based on the resource allocated to PDSCH, and then the terminal can receive PDSCH based on the allocated resource, thereby improving the transmission reliability of the channel.

In a communication method provided by the embodiment of the present disclosure, a frequency band bandwidth corresponding to a frequency band in which the terminal operates is a fixed bandwidth, and the first frequency band bandwidth is the frequency band bandwidth corresponding to the frequency band in which the terminal operates.

Exemplarily, the frequency band number corresponding to the frequency band in which the terminal operates is n8, n26 or n28, and the frequency band bandwidth corresponding to the frequency band in which the terminal operates is a fixed bandwidth of 3 MHz, and the first frequency band bandwidth is 3 MHz.

In a communication method provided by the embodiment of the present disclosure, the frequency band bandwidth corresponding to the frequency band in which the terminal operates is greater than or equal to a first threshold and less than or equal to a second threshold, and the first threshold is less than the second threshold; the first frequency band bandwidth is the first threshold.

Exemplarily, the frequency band number corresponding to the frequency band in which the terminal operates is n100, etc., and the frequency band bandwidth corresponding to the frequency band in which the terminal operates is in the bandwidth range of 2.8MHz to 3.6MHz, then the first frequency band bandwidth is the smallest bandwidth in the bandwidth range, that is, 2.8MHz.

In a communication method provided in the embodiment of the present disclosure, when the frequency band bandwidth corresponding to the frequency band in which the terminal operates is the bandwidth range, the terminal does not know how many MHz the system bandwidth used for the NR system is. At this time, the terminal receives the downlink channel/signal based on the minimum frequency band bandwidth (the first frequency band bandwidth), but the network device may perform rate matching and resource mapping based on the first frequency band bandwidth, or perform rate matching and resource mapping based on the resource allocated to the terminal.

In some embodiments of a communication method provided by the embodiment of the present disclosure, the network device performs rate matching and resource mapping based on the first frequency band bandwidth, and the terminal receives the downlink channel/signal based on the first frequency band bandwidth. As shown in FIG. 7, the following steps are included.

In step S61, in response to determining that the network device performs rate matching and resource mapping based on the first frequency band bandwidth, a downlink channel/signal is received based on the first frequency band bandwidth.

In some embodiments, the network device performs rate matching based on the first frequency band bandwidth, and maps the transmission information to the transmission resource(s) corresponding to the first frequency band bandwidth in the order of frequency domain first and then time domain. The terminal performs rate matching and resource demapping based on the first frequency band bandwidth, and receives the downlink channel/signal based on the first frequency band bandwidth.

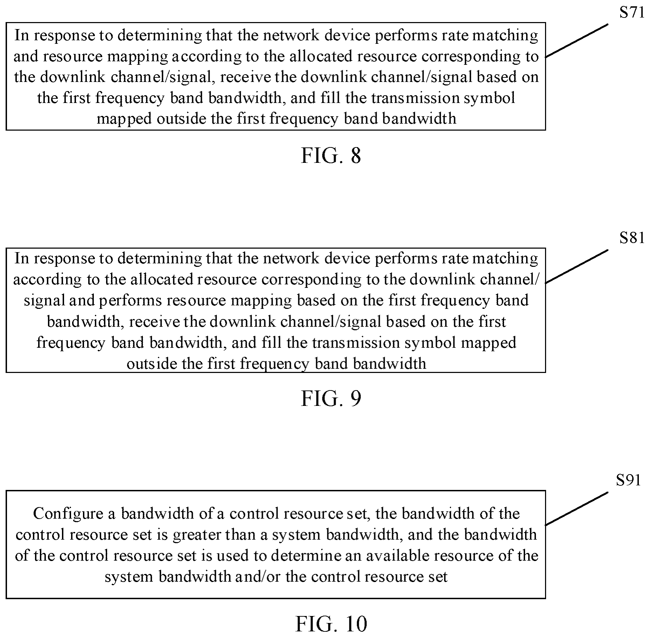

In some embodiments of a communication method provided by the embodiment of the present disclosure, the network device performs rate matching and resource mapping based on the allocated resource corresponding to the downlink channel/signal, and the terminal receives the downlink channel/signal based on the first frequency band bandwidth. As shown in FIG. 8, the following steps are included.

In step S71, in response to determining that the network device performs rate matching and resource mapping according to the allocated resource corresponding to the downlink channel/signal, the downlink channel/signal is received based on the first frequency band bandwidth, and the transmission symbol mapped outside the first frequency band bandwidth is filled.

The allocated resource corresponding to the downlink channel/signal represents the resource allocated by the terminal to the downlink channel/signal.

In some embodiments, the network device performs rate matching and resource mapping according to the allocated resource corresponding to the downlink channel/signal, and discards the transmission symbol mapped outside the system bandwidth. The terminal receives the downlink channel/signal based on the first frequency band bandwidth, and fills the transmission symbol mapped outside the first frequency band bandwidth.

Exemplarily, the bandwidth corresponding to the allocated resource corresponding to the downlink channel/signal is 3.2MHz, the first frequency band bandwidth is 2.8MHz, corresponding to 14 OFDM symbols, 1400 bits, when the network device performs resource mapping, it maps 100 bits for each OFDM symbol, of which 0.4MHz (corresponding to 20 bits) is mapped outside the system bandwidth, and the network device discards 20 bits on each OFDM symbol, for example, discarding the 80th to 100th bits on the first OFDM symbol, discarding the 180th to 200th bits on the second OFDM transmission symbol, and so on. When the terminal receives the channel/signal, it fills each OFDM transmission symbol correspondingly.

In some embodiments, the network device performs rate matching and resource mapping according to the allocated resource corresponding to the downlink channel/signal, and discards the transmission symbol mapped outside the system bandwidth. In response to the terminal accessing the network device, the terminal receives the downlink channel/signal based on the system bandwidth, and fills the transmission symbol mapped outside the system bandwidth.

In some embodiments of a communication method provided in an embodiment of the present disclosure, the network device performs rate matching based on the allocated resource corresponding to the downlink channel/signal, performs resource mapping based on the first frequency band bandwidth, and the terminal receives the downlink channel/signal based on the first frequency band bandwidth. As shown in FIG. 9, the following steps are included.

In step S81, in response to determining that the network device performs rate matching according to the allocated resource corresponding to the downlink channel/signal and performs resource mapping based on the first frequency band bandwidth, the downlink channel/signal is received based on the first frequency band bandwidth, and the transmission symbol mapped outside the first frequency band bandwidth is filled.

In some embodiments, the network device performs rate matching according to the allocated resource corresponding to the downlink channel/signal, and performs resource mapping of the transmission resource corresponding to the downlink channel/signal within the resource corresponding to the first frequency band bandwidth. If the actual system bandwidth at this time is greater than the first frequency band bandwidth, the mapping continues outside the allocated resource corresponding to the first frequency band bandwidth, and the network device discards the transmission symbol mapped outside the first frequency band bandwidth. The terminal receives the downlink channel/signal based on the first frequency band bandwidth, and fills the transmission symbol mapped outside the first frequency band bandwidth.

Exemplarily, the bandwidth corresponding to the allocated resource corresponding to the downlink channel/signal is 3.2MHz, the first frequency band bandwidth is 2.8MHz, corresponding to 14 OFDM symbols, 1400 bits, when the network device performs resource mapping, it maps 2.8MHz (corresponding to 80 bits) to each OFDM symbol, and there are 280 bits left, corresponding to the 1120th to the 1400th bits, and the 1120th to the 1400th bits are mapped to each OFDM symbol respectively, for example, the bits mapped to the first OFDM symbol are the first to the 80^{th} bits and the 1121^{st} to the 1140^{th} bits, then when the network device discards, the 1121^{st} to the 1140^{th} bits are discarded. Accordingly, when the terminal receives the downlink channel/signal based on the first frequency band bandwidth, each OFDM symbol is filled.

In the embodiments of the present disclosure, when the terminal is unaware of the actual system bandwidth, the terminal receives the downlink channel/signal based on the minimum system bandwidth supported by the frequency band in which the terminal operates, and fills the transmission symbol mapped outside the minimum system bandwidth, thereby ensuring the transmission reliability of the downlink channel/signal.

Based on the same concept, an embodiment of the present disclosure also provides a communication method performed by the network device.

FIG. 10 is a flowchart showing a communication method according to an exemplary embodiment. As shown in FIG. 10, the communication method is performed by the network device and includes the following steps.

In step S91, a bandwidth of a control resource set is configured, the bandwidth of the control resource set is greater than a system bandwidth, and the bandwidth of the resource set is used to determine an available resource of the system bandwidth and/or the control resource set.

In one implementation, the control resource set is control resource set 0.

The available resource of the control resource set represents a resource in the control resource set used to transmit the PDCCH. This is because the bandwidth configured by the network device for the control resource set is greater than the system bandwidth, and the resources configured by the network device for the control resource set cannot all be carried in the system bandwidth. Only part of the resources configured by the network device for the control resource set are in the system bandwidth, that is, the resource(s) that can actually transmit channels/signals. The resource(s) outside the system bandwidth cannot transmit the channels/signals.

In some embodiments, the network device is configured to configure the transmission resource for the control resource set, and determine the bandwidth of the control resource set based on the configured transmission resource. In the case that the bandwidth of the control resource set is greater than the system bandwidth, the terminal can determine the available resource of the control resource set based on the bandwidth of the control resource set. For example, the number of resources that can be transmitted in the system bandwidth is 15, and the number of resources configured by the network device for the control resource set is 24. The number of resources in the control resource set is greater than the number of resources that can be transmitted in the system bandwidth. It is necessary to determine which part of the 24 resources corresponding to the control resource set is within the system bandwidth. Therefore, in the case that the bandwidth configured by the network device for the control resource set is greater than the system bandwidth, the terminal can determine the available resource of the control resource set and receive the PDCCH based on the available resource.

In some embodiments, the network device configures the transmission resource for the control resource set. When the system bandwidth is small, the resources configured by the network device for the control resource set cannot be fully carried in the system bandwidth. However, since the terminal cannot know the system bandwidth before receiving the PDCCH, the terminal cannot know which part of the resources of the control resource set is within the system bandwidth, that is, it cannot correctly receive the PDCCH. Therefore, in the case that the bandwidth configured by the network device for the control resource set is greater than the system bandwidth, the terminal can determine the system bandwidth based on the bandwidth of the control resource set, and determine the available resource of the control resource set based on the system bandwidth.

In some embodiments, the available resource of the control resource set represents the number of PRBs in the control resource set that can actually be used to transmit the PDCCH.

In the embodiments of the present disclosure, the network device configures the bandwidth of the control resource set for the terminal. In the case that the bandwidth of the control resource set configured by the network device is greater than the system bandwidth, the terminal can determine the available resource(s) of the control resource set and/or the system bandwidth; where the available resource(s) of the control resource set represents the resource(s) in the control resource set used for actually transmitting the physical downlink control channel. Thus, the terminal can receive the PDCCH based on the available resource(s) of the control resource set, thereby improving the transmission reliability of the PDCCH. Moreover, the terminal can obtain the system bandwidth before receiving the PDCCH, thereby performing good processing on downlink channels/signals such as the PDCCH based on the system bandwidth.

In a communication method provided by an embodiment of the present disclosure, the available resource of the control resource set and/or system bandwidth is determined based on a first frequency band bandwidth.

The first frequency band bandwidth represents a frequency band bandwidth corresponding to a frequency band in which the terminal operates.

In one implementation, the available resource of the system bandwidth and/or the control resource set is determined based on the first frequency band bandwidth.

In the embodiments of the present disclosure, the available resource of the system bandwidth and/or the control resource set is determined based on the frequency band bandwidth corresponding to the frequency band in which the terminal operates, so that the terminal can determine the system bandwidth before demodulating the PDCCH. At the same time, the terminal can receive the PDCCH based on the available resource of the control resource set, thereby improving the transmission reliability of the PDCCH.

In a communication method provided by an embodiment of the present disclosure, the system bandwidth is determined based on a position of a synchronization signal block (SSB) and the first frequency band bandwidth.

In some embodiments, the system bandwidth is determined based on the lowest frequency point corresponding to the SSB and a bandwidth allocated to the NR system in the first frequency band bandwidth.

For example, the lowest frequency point corresponding to SSB is x, and the bandwidth allocated to the NR system in the first frequency band bandwidth is Y, then the system bandwidth is greater than or equal to x MHz and less than or equal to (x+Y) MHz. The system bandwidth is any value between x and x+Y, and the specific value of the system bandwidth is determined by the network device.

In a communication method provided by an embodiment of the present disclosure, the available resource of the control resource set is determined based on the position of the SSB, the first frequency band bandwidth, and a starting position of the control resource set.

Exemplarily, the lowest frequency point corresponding to SSB is x, the bandwidth allocated to the NR system in the first frequency band bandwidth is Y, and the starting position of the control resource set is Z, then the available resource of the control resource set is (x+Y-Z).

In some embodiments, the starting position of the control resource set is determined based on the MIB.

In some embodiments, the network device sends the MIB to the terminal.

In some embodiments, the terminal receives the MIB, and determines the position and resource offset value of the reference resource of the control resource set based on the MIB, and determines the starting position based on the position and resource offset value of the reference resource. For example, the reference resource position is the N-th PRB, and the resource offset value is *a*, then the starting position is the (N+*a*)-th PRBs.

In the embodiments of the present disclosure, the terminal determines the available resource of the system bandwidth and/or the control resource set based on its own needs, so as to perform good processing on subsequent downlink channels/signals and ensure the transmission reliability of the downlink channels/signals.

In a communication method provided by an embodiment of the present disclosure, the available resource of the control resource set and/or system bandwidth is used to determine an initial DL BWP, and the initial DL BWP is used to transmit the downlink channel/signal.

In some embodiments of a communication method provided in the embodiment of the present disclosure, the initial DL BWP may be the system bandwidth.

In some other embodiments of a communication method provided by the embodiment of the present disclosure, in the case that the bandwidth corresponding to the available resource of the control resource set is smaller than the system bandwidth, the initial DL BWP may be the bandwidth corresponding to the available resource of the control resource set.

The bandwidth corresponding to the available resource of the control resource set is less than or equal to the system bandwidth.

In the embodiments of the present disclosure of the present disclosure, the terminal can determine the initial DL BWP based on the available resource of the system bandwidth or the control resource set, so as to allocate the resource for the PDSCH in the initial DL BWP, so that the network device can transmit the PDSCH based on the resource allocated to the PDSCH, and then the terminal can receive the PDSCH based on the allocated resource, thereby improving the transmission reliability of the channel.

In a communication method provided by an embodiment of the present disclosure, the frequency band bandwidth corresponding to the frequency band in which the terminal operates is a fixed bandwidth, and the first frequency band bandwidth is a frequency band bandwidth corresponding to the frequency band in which the terminal operates.

Exemplarily, the frequency band number corresponding to the frequency band in which the terminal operates is n8, n26 or n28, and the frequency band bandwidth corresponding to the frequency band in which the terminal operates is a fixed bandwidth of 3 MHz, and the first frequency band bandwidth is 3 MHz.

In a communication method provided in an embodiment of the present disclosure, the frequency band bandwidth corresponding to the frequency band in which the terminal operates is greater than or equal to a first threshold and is less than or equal to a second threshold, and the first threshold is less than the second threshold; the first frequency band bandwidth is the first threshold.

Exemplarily, the frequency band number corresponding to the frequency band in which the terminal operates is n100, etc., and the frequency band bandwidth corresponding to the frequency band in which the terminal operates is in the bandwidth range of 2.8MHz to 3.6MHz, then the first frequency band bandwidth is the smallest bandwidth in the bandwidth range, that is, 2.8MHz.

In a communication method provided by an embodiment of the present disclosure, when the frequency band bandwidth corresponding to the frequency band in which the terminal operates is the bandwidth range, the terminal does not know how many MHz the system bandwidth used for the NR system is. At this time, the terminal receives the downlink channel/signal based on the minimum frequency band bandwidth (first frequency band bandwidth), but the network device may perform rate matching and resource mapping based on the first frequency band bandwidth, or may perform rate matching and resource mapping based on the resource allocated to the terminal.

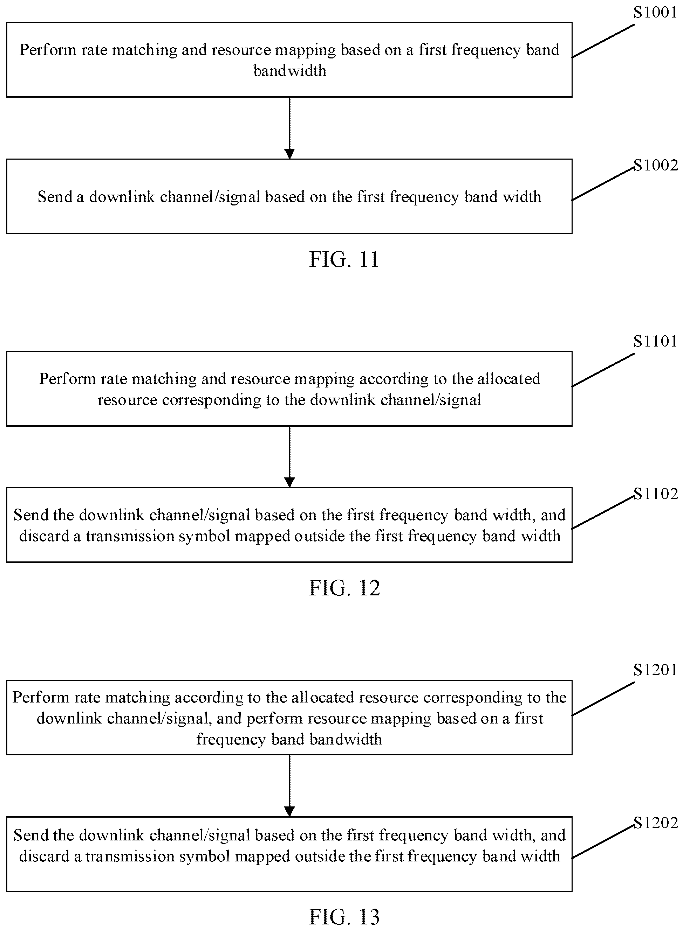

In some embodiments of a communication method provided by an embodiment of the present disclosure, the network device performs rate matching and resource mapping based on the first frequency band bandwidth, as shown in FIG. 11, including the following steps.

In step S1001, rate matching and resource mapping are performed based on a first frequency band bandwidth.

In step S1002, a downlink channel/signal is sent based on the first frequency band width.

In some embodiments, the network device performs rate matching based on the first frequency band bandwidth, and maps the transmission information to the transmission resource corresponding to the first frequency band bandwidth in the order of frequency domain first and then time domain. The terminal performs rate matching and resource demapping based on the first frequency band bandwidth, and receives the downlink channel/signal based on the first frequency band bandwidth.

In some embodiments of a communication method provided by the embodiment of the present disclosure, the network device performs rate matching and resource mapping based on the allocated resource corresponding to the downlink channel/signal. As shown in FIG. 12, the method includes the following steps.

In step S1101, rate matching and resource mapping are performed according to the allocated resource corresponding to the downlink channel/signal.

The allocated resource corresponding to the downlink channel/signal represents the resource allocated by the terminal to the downlink channel/signal.

In step S1102, the downlink channel/signal is sent based on the first frequency band width, and a transmission symbol mapped outside the first frequency band width is discarded.

In some embodiments, the network device performs rate matching and resource mapping according to the allocated resource corresponding to the downlink channel/signal, and discards the transmission symbol mapped outside the system bandwidth. The terminal receives the downlink channel/signal based on the first frequency band bandwidth, and fills the transmission symbol mapped outside the first frequency band bandwidth.

Exemplarily, the bandwidth corresponding to the actual transmission resource corresponding to the downlink channel/signal is 3.2MHz, the first frequency band bandwidth is 2.8MHz, corresponding to 14 OFDM symbols, 1400 bits, when the network device performs resource mapping, it maps 100 bits for each OFDM symbol, of which 0.4MHz (corresponding to 20 bits) is mapped outside the system bandwidth, and the network device discards 20 bits on each OFDM symbol, for example, discarding the 80th to the 100th bits on the first OFDM symbol, discarding the 180th to the 200th bits on the second OFDM transmission symbol, and so on. When the terminal receives the channel/signal, it fills each OFDM transmission symbol.

In some embodiments, the network device performs rate matching and resource mapping according to the allocated resource corresponding to the downlink channel/signal, and discards the transmission symbol mapped outside the system bandwidth. In response to the terminal accessing the network device, the terminal receives a downlink channel/signal based on the system bandwidth, and fills the transmission symbol mapped outside the system bandwidth.

In some embodiments of a communication method provided by the embodiments of the present disclosure, the network device performs rate matching based on the actual transmission resource corresponding to the downlink channel/signal and performs resource mapping based on the first frequency band bandwidth. As shown in FIG. 13, the following steps are included.

In step S1201, rate matching is performed according to the allocated resource corresponding to the downlink channel/signal, and resource mapping is performed based on a first frequency band bandwidth.

In step S1202, the downlink channel/signal is sent based on the first frequency band width, and a transmission symbol mapped outside the first frequency band width is discarded.

In some embodiments, the network device performs rate matching according to the allocated resource corresponding to the downlink channel/signal, and performs resource mapping of the transmission resource corresponding to the downlink channel/signal within the resource corresponding to the first frequency band bandwidth. If the actual system bandwidth at this time is greater than the first frequency band bandwidth, the mapping continues outside the transmission resource(s) corresponding to the first frequency band bandwidth, and the network device discards the transmission symbol(s) mapped outside the first frequency band bandwidth. The terminal receives the downlink channel/signal based on the first frequency band bandwidth, and fills the transmission symbol(s) mapped outside the first frequency band bandwidth.

Exemplarily, the bandwidth corresponding to the actual transmission resource corresponding to the downlink channel/signal is 3.2MHz, and the first frequency band bandwidth is 2.8MHz, corresponding to 14 OFDM symbols, 1400 bits. When the network device performs resource mapping, it maps 2.8MHz (corresponding to 80 bits) to each OFDM symbol. At this time, there are 280 bits left, corresponding to the 1120^{th} to the 1400^{th} bits. The 1120^{th} to 1400^{th} bits are mapped to each OFDM symbol respectively. For example, the bits mapped to the first OFDM symbol are the 1^{st} to the 80^{th} bits and the 1121^{st} to the 1140^{th} bits. When the network device discards, the 1121^{st} to the 1140^{th} bits are discarded. Accordingly, when the terminal receives the downlink channel/signal based on the first frequency band bandwidth, each OFDM symbol is filled.

In the embodiments of the present disclosure, in the case that the terminal is unaware of the actual system bandwidth, the network device sends a downlink channel/signal based on the minimum system bandwidth supported by the frequency band in which the terminal operates, and the terminal discards the transmission symbol(s) mapped outside the minimum system bandwidth, thereby ensuring the transmission reliability of the downlink channel/signal.

It should be noted that those skilled in the art can understand that the various implementations/embodiments involved in the embodiments of the present disclosure can be used in conjunction with the aforementioned embodiments or can be used independently. Whether used alone or in conjunction with the aforementioned embodiments, the implementation principle is similar. In the implementation of the present disclosure, some embodiments are described in terms of implementations used together. Those skilled in the art can understand that such examples are not limitations of the embodiments of the present disclosure.

Based on the same concept, an embodiment of the present disclosure also provides a communication apparatus.

It can be understood that, in order to realize the above functions, the communication apparatus provided in the embodiment of the present disclosure includes the hardware structure and/or software module corresponding to executing the various functions. In combination with the units and algorithm steps of each example disclosed in the embodiments of the present disclosure, the embodiments of the present disclosure can be implemented in the form of hardware or a combination of hardware and computer software. Whether a certain function is executed in the form of hardware or computer software driving hardware depends on the specific application and design constraints of the technical solution. Those skilled in the art can use different methods to implement the described functions for each specific application, but such implementation should not be considered to go beyond the scope of the technical solutions of the embodiments of the present disclosure.

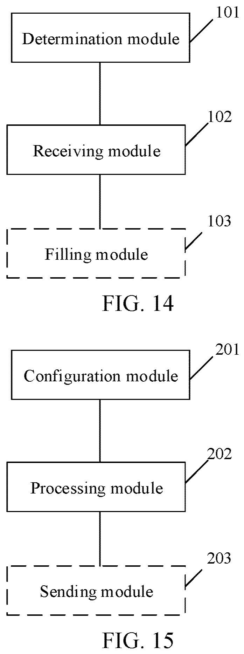

FIG. 14 is a block diagram of a communication apparatus according to an exemplary embodiment. Referring to FIG. 14, the apparatus includes a determination module 101.

The determination module 101 is configured to determine an available resource of a system bandwidth and/or a control resource set in response to determining that a bandwidth configured by the network device for the control resource set is greater than the system bandwidth;
the available resource of the control resource set refers to a resource in the control resource set used for transmitting a physical downlink control channel (PDCCH).

In one implementation, the determination module 101 is configured to determine the available resource of the control resource set and/or system bandwidth based on a first frequency band width, where the first frequency band width is determined based on a frequency band bandwidth corresponding to a frequency band in which the terminal operates.

In one implementation, the determination module 101 is configured to determine the system bandwidth based on a position of a synchronization signal block (SSB) and the first frequency band bandwidth; and/or
determine the available resource of the control resource set based on the position of the SSB, the first frequency band bandwidth and a starting position of the control resource set, where the starting position of the control resource set is determined based on a master information block (MIB).

In one implementation, the determination module 101 is configured to determine an initial downlink bandwidth part based on the available resource of the system bandwidth or the control resource set, where the initial downlink bandwidth part is used to transmit a downlink channel/signal.

In one implementation, the initial downlink bandwidth part is the system bandwidth.

In one implementation, the bandwidth corresponding to the available resource of the control resource set is smaller than the system bandwidth, and the initial downlink bandwidth part is a bandwidth corresponding to the available resource of the control resource set.

In one implementation, the frequency band bandwidth corresponding to the frequency band in which the terminal operates is a fixed bandwidth, and the first frequency band bandwidth is a frequency band bandwidth corresponding to the frequency band in which the terminal operates.

In one implementation, the frequency band bandwidth corresponding to the frequency band in which the terminal operates is greater than or equal to a first threshold and less than or equal to a second threshold, and the first threshold is less than the second threshold;
the first frequency band bandwidth is the first threshold.

In one implementation, the apparatus further includes a receiving module 102. In response to determining that the network device performs rate matching and resource mapping based on the first frequency band bandwidth, the receiving module 102 is configured to receive a downlink channel/signal based on the first frequency band bandwidth.

In one implementation, the apparatus further includes a filling module 103. In response to determining that the network device performs rate matching and resource mapping according to the allocated resource corresponding to the downlink channel/signal, the receiving module 102 is configured to receive the downlink channel/signal based on the first frequency band bandwidth;
the filling module 103 is configured to fill a transmission symbol mapped outside the first frequency band bandwidth.

In one implementation, in response to determining that the network device performs rate matching according to the allocated resource corresponding to the downlink channel/signal and performs resource mapping based on the first frequency band bandwidth, the receiving module 102 is configured to receive the downlink channel/signal based on the first frequency band bandwidth;
the filling module 103 is configured to fill the transmission symbol mapped outside the first frequency band bandwidth.

FIG. 15 is a block diagram of a communication apparatus according to an exemplary embodiment. Referring to FIG. 15, the apparatus includes a configuration module 201.

The configuration module 201 is configured to configure a bandwidth of a control resource set. The bandwidth of the control resource set is greater than the system bandwidth. The bandwidth of the control resource set is used to determine the available resource of the system bandwidth and/or the configuration resource set. The available resource of the control resource set represents a resource in the control resource set used to transmit PDCCH.

In one implementation, the available resource of the configured resource set and/or the system bandwidth is determined based on a first frequency band bandwidth, where the first frequency band bandwidth represents a frequency band bandwidth corresponding to a frequency band in which the terminal operates.

In one implementation, the system bandwidth is determined based on the position of the synchronization signal block (SSB) and the first frequency band bandwidth; and/or
the available resource of the control resource set is determined based on the position of the SSB, the first frequency band bandwidth, and the starting position of the control resource set.

In one implementation, the available resource of the system bandwidth and/or the control resource set is used to determine an initial downlink bandwidth part, and the initial downlink bandwidth part is used to transmit a downlink channel/signal.

In one implementation, the bandwidth of the control resource set is smaller than the first frequency band bandwidth, and the initial downlink bandwidth part is the bandwidth of the control resource set.

In one implementation, the bandwidth corresponding to the available resource of the control resource set is smaller than the system bandwidth, and the initial downlink bandwidth part is the bandwidth corresponding to the available resource of the control resource set.

In one implementation, the frequency band bandwidth corresponding to the frequency band at which the terminal operates is a fixed bandwidth, and the first frequency band bandwidth is the frequency band bandwidth corresponding to the frequency band at which the terminal operates.

In one implementation, the frequency band bandwidth corresponding to the frequency band in which the terminal operates is greater than or equal to a first threshold and less than or equal to a second threshold, and the first threshold is less than the second threshold;
the first frequency band bandwidth is a first threshold.

In one implementation, the apparatus further includes a processing module 202 and a sending module 203.

The processing module 202 is configured to perform rate matching and resource mapping based on the first frequency band bandwidth.

The sending module 203 is configured to send a downlink channel/signal based on the first frequency band bandwidth.

In one implementation, the processing module 202 is configured to perform rate matching and resource mapping according to the allocated resource corresponding to the downlink channel/signal;
the sending module 203 is configured to send a downlink channel/signal based on the first frequency band width, and discard a transmission symbol mapped outside the first frequency band bandwidth.

In one implementation, the processing module 202 is configured to perform rate matching according to the allocated resource corresponding to the downlink channel/signal and perform resource mapping based on the first frequency band bandwidth;
the sending module 203 is configured to send a downlink channel/signal based on the first frequency band width, and discard a transmission symbol mapped outside the first frequency band width.

Regarding the apparatuses in the above embodiments, the specific manner in which each module performs operations has been described in detail in the embodiments of the methods, and will not be elaborated here.

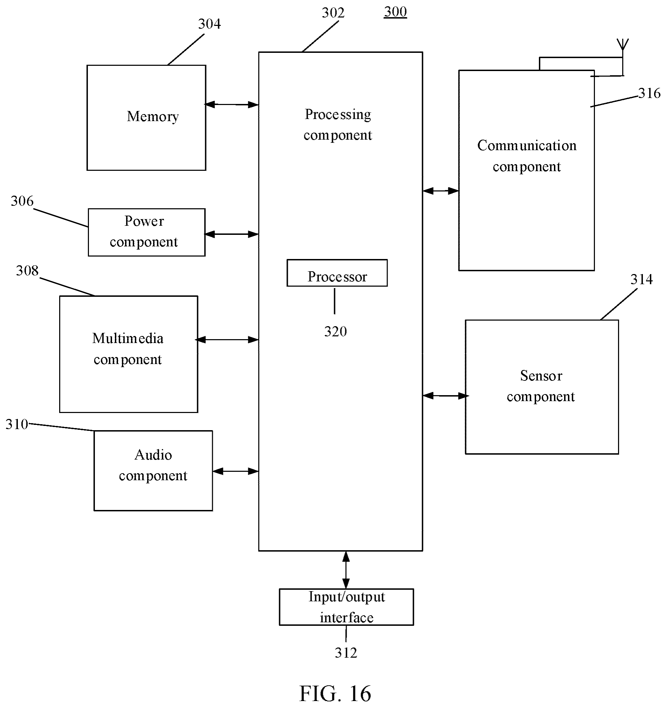

FIG. 16 is a block diagram of a communication apparatus according to an exemplary embodiment. For example, the apparatus 300 may be a mobile phone, a computer, a digital broadcast terminal, a messaging device, a game console, a tablet device, a medical device, a fitness device, a personal digital assistant, etc.

Referring to FIG. 16, the apparatus 300 may include one or more of the following components: a processing component 302, a memory 304, a power component 306, a multimedia component 308, an audio component 310, an input/output (I/O) interface 312, a sensor component 314, and a communication component 316.

The processing component 302 generally controls the overall operation of the apparatus 300, such as operations associated with display, phone calls, data communications, camera operations, and recording operations. The processing component 302 may include one or more processors 320 to execute instructions to complete all or part of the steps of the above-mentioned methods. In addition, the processing component 302 may include one or more modules to facilitate the interaction between the processing component 302 and other components. For example, the processing component 302 may include a multimedia module to facilitate the interaction between the multimedia component 308 and the processing component 302.

The memory 304 is configured to store various types of data to support operations on the apparatus 300. Examples of such data include instructions for any application or method operating on the apparatus 300, contact data, phone book data, messages, pictures, videos, etc. The memory 304 can be implemented by any type of volatile or non-volatile storage device or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic disk or an optical disk.

The power component 306 provides power to the various components of the apparatus 300. The power component 306 may include a power management system, one or more power supplies, and other components associated with generating, managing, and distributing power for the apparatus 300.

The multimedia component 308 includes a screen that provides an output interface between the apparatus 300 and the user. In some embodiments, the screen may include a liquid crystal display (LCD) and a touch panel (TP). If the screen includes a touch panel, the screen may be implemented as a touch screen to receive input signals from the user. The touch panel includes one or more touch sensors. The sensor is used to sense touch, swipe, and gestures on the touch panel. The touch sensor can not only sense the boundaries of the touch or swipe action, but also detect the duration and pressure associated with the touch or swipe operation. In some embodiments, the multimedia component 308 includes a front camera and/or a rear camera. When the apparatus 300 is in an operating mode, such as a shooting mode or a video mode, the front camera and/or the rear camera can receive external multimedia data. Each front camera and rear camera can be a fixed optical lens system or have a focal length and optical zoom capability.

The audio component 310 is configured to output and/or input audio signals. For example, the audio component 310 includes a microphone (MIC), and when the apparatus 300 is in an operating mode, such as a call mode, a recording mode, and a speech recognition mode, the microphone is configured to receive an external audio signal. The received audio signal can be further stored in the memory 304 or sent via the communication component 316. In some embodiments, the audio component 310 also includes a speaker for outputting audio signals.

The I/O interface 312 provides an interface between the processing component 302 and peripheral interface modules, such as keyboards, click wheels, buttons, etc. These buttons may include but are not limited to: a home button, a volume button, a start button, and a lock button.

The sensor assembly 314 includes one or more sensors for providing various aspects of the status assessment of the apparatus 300. For example, the sensor assembly 314 can detect the open/closed state of the apparatus 300, the relative positioning of components, such as the display and keypad of the apparatus 300, the sensor assembly 314 can also detect the position change of the apparatus 300 or a component of the apparatus 300, the presence or absence of user contact with the apparatus 300, the orientation or acceleration/deceleration of the apparatus 300, and the temperature change of the apparatus 300. The sensor assembly 314 can include a proximity sensor configured to detect the presence of a nearby object without any physical contact. The sensor assembly 314 can also include an optical sensor, such as a CMOS or CCD image sensor, for use in imaging applications. In some embodiments, the sensor assembly 314 can also include an accelerometer, a gyroscope sensor, a magnetic sensor, a pressure sensor, or a temperature sensor.

The communication component 316 is configured to facilitate wired or wireless communication between the apparatus 300 and other devices. The apparatus 300 can access a wireless network based on a communication standard, such as WiFi, 2G or 3G, or a combination thereof. In an exemplary embodiment, the communication component 316 receives a broadcast signal or broadcast-related information from an external broadcast management system via a broadcast channel. In an exemplary embodiment, the communication component 316 also includes a near field communication (NFC) module to facilitate short-range communication. For example, the NFC module can be implemented based on radio frequency identification (RFID) technology, infrared data association (IrDA) technology, ultra-wideband (UWB) technology, Bluetooth (BT) technology and other technologies.

In an exemplary embodiment, the apparatus 300 may be implemented by one or more application specific integrated circuits (ASICs), digital signal processors (DSPs), digital signal processing devices (DSPDs), programmable logic devices (PLDs), field programmable gate arrays (FPGAs), controllers, microcontrollers, microprocessors or other electronic components to perform the above methods.

In an exemplary embodiment, a non-transitory computer-readable storage medium including instructions is also provided, such as a memory 304 including instructions, which can be executed by a processor 320 of the apparatus 300 to perform the above methods. For example, the non-transitory computer-readable storage medium may be a ROM, a random access memory (RAM), a CD-ROM, a magnetic tape, a floppy disk, an optical data storage device, and the like.

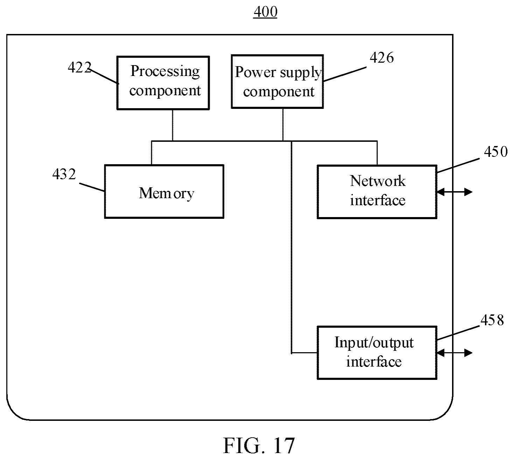

FIG. 17 is a block diagram of a communication apparatus according to an exemplary embodiment. For example, the apparatus 400 may be provided as a network device. Referring to FIG. 17, the apparatus 400 includes a processing component 422, which further includes one or more processors, and a memory resource represented by a memory 432 for storing instructions executable by the processing component 422, such as an application. The application stored in the memory 432 may include one or more modules, each corresponding to a set of instructions. In addition, the processing component 422 is configured to execute instructions to perform the above methods.

The apparatus 400 may also include a power supply component 426 configured to perform power management of the apparatus 400, a wired or wireless network interface 450 configured to connect the apparatus 400 to a network, and an input/output (I/O) interface 458. The apparatus 400 may operate based on an operating system stored in the memory 432, such as Windows Server^{™}, Mac OS X^{™}, Unix^{™}, Linux^{™}, FreeBSD^{™}, or the like.

In an exemplary embodiment, a non-transitory computer-readable storage medium including instructions is also provided, such as a memory 432 including instructions, which can be executed by the processing component 422 of the apparatus 400 to perform the above methods. For example, the non-transitory computer-readable storage medium can be a ROM, a random access memory (RAM), a CD-ROM, a magnetic tape, a floppy disk, an optical data storage device, etc.

It is further understood that in the present disclosure, "plurality" refers to two or more than two, and other quantifiers are similar thereto. "And/or" describes the association relationship of associated objects, indicating that three relationships may exist. For example, A and/or B may represent: A exists alone, A and B exist at the same time, and B exists alone. The character "/" generally indicates that the associated objects before and after are in an "or" relationship. The singular forms "a/an", " said", and "the" are also intended to include plural forms, unless the context clearly indicates other meanings.

It is further understood that the meanings of the words "in response to" and "if" involved in the present disclosure depend on the context and the actual usage scenario. For example, the word "in response to" used herein can be interpreted as "at..." or "when..." or "if".

It is further understood that the terms "first", "second", etc. are used to describe various information, but such information should not be limited to these terms. These terms are only used to distinguish the same type of information from each other, and do not indicate a specific order or degree of importance. In fact, the expressions "first", "second", etc. can be used interchangeably. For example, without departing from the scope of the present disclosure, the first information can also be referred to as the second information, and similarly, the second information can also be referred to as the first information.

It is further understood that, although the operations are described in a specific order in the drawings in the embodiments of the present disclosure, it should not be understood as requiring the operations to be performed in the specific order shown or in a serial order, or requiring the execution of all the operations shown to obtain the desired results. In certain environments, multitasking and parallel processing may be advantageous.

Other embodiments of the present disclosure will be apparent to those skilled in the art from consideration of the specification and practice of the contents disclosed herein. The present application is intended to cover any modifications, uses or adaptive changes of the present disclosure, which follow the general principles of the present disclosure and include common knowledge or customary technical means in the technical field that are not disclosed in the present disclosure.

It should be understood that the present disclosure is not limited to the precise structures that have been described above and shown in the drawings, and that various modifications and changes may be made without departing from the scope thereof. The scope of the present disclosure is limited only by the scope of the appended claims.

## Claims

1. A communication method, performed by a terminal, comprising:
in response to determining that a bandwidth configured by a network device for a control resource set is greater than a system bandwidth, determining an available resource of the system bandwidth and/or an available resource of the control resource set;
wherein the available resource of the control resource set represents a resource in the control resource set used for transmitting a physical downlink control channel (PDCCH).

2. The method according to claim 1, wherein determining the available resource of the control resource set and/or the available resource of the system bandwidth comprises:
determining the available resource of the system bandwidth and/or the available resource of the control resource set based on a first frequency band bandwidth, wherein the first frequency band bandwidth is determined based on a frequency band bandwidth corresponding to a frequency band in which the terminal operates.

3. The method according to claim 2, wherein determining the available resource of the system bandwidth and/or the available resource of the control resource set based on the first frequency band bandwidth comprises:
determining the system bandwidth based on a position of a synchronization signal block (SSB) and the first frequency band bandwidth; and/or
determining the available resource of the control resource set based on the position of the SSB, the first frequency band bandwidth and a starting position of the control resource set, wherein the starting position of the control resource set is determined based on a master information block (MIB).

4. The method according to claim 1, wherein the method further comprises:
determining an initial downlink bandwidth part based on the available resource of the system bandwidth or the available resource of the control resource set, wherein the initial downlink bandwidth part is used to transmit a downlink channel/signal.

5. The method according to claim 4, wherein the initial downlink bandwidth part is the system bandwidth.

6. The method according to claim 5, wherein a bandwidth corresponding to the available resource of the control resource set is smaller than the system bandwidth, and the initial downlink bandwidth part is a bandwidth corresponding to the available resource of the control resource set.

7. The method according to any one of claims 3 to 6, wherein a frequency band bandwidth corresponding to a frequency band in which the terminal operates is a fixed bandwidth, and a first frequency band bandwidth is the frequency band bandwidth corresponding to the frequency band in which the terminal operates.

8. The method according to any one of claims 3 to 6, wherein the frequency band bandwidth corresponding to the frequency band in which the terminal operates is greater than or equal to a first threshold and less than or equal to a second threshold, and the first threshold is less than the second threshold;
a first frequency band bandwidth is the first threshold.

9. The method according to claim 8, wherein the method further comprises:
in response to determining that the network device performs rate matching and resource mapping based on the first frequency band bandwidth, receiving a downlink channel/signal based on the first frequency band bandwidth.

10. The method according to claim 8, wherein the method further comprises:
in response to determining that the network device performs rate matching and resource mapping according to an allocated resource corresponding to a downlink channel/signal, receiving the downlink channel/signal based on the first frequency band bandwidth, and filling a transmission symbol mapped outside the first frequency band bandwidth.

11. The method according to claim 8, wherein the method further comprises:
in response to determining that the network device performs rate matching according to an allocated resource corresponding to a downlink channel/signal and performs resource mapping based on the first frequency band bandwidth, receiving the downlink channel/signal based on the first frequency band bandwidth, and filling a transmission symbol mapped outside the first frequency band bandwidth.

12. A communication method, performed by a network device, the method comprising:
configuring a bandwidth of a control resource set, wherein the bandwidth of the control resource set is greater than a system bandwidth, the bandwidth of the control resource set is used to determine an available resource of the system bandwidth and/or an available resource of the control resource set, and the available resource of the control resource set represents a resource in the control resource set used for transmitting a physical downlink control channel (PDCCH).

13. The method according to claim 12, wherein the available resource of the system bandwidth and/or the available resource of the control resource set is determined based on a first frequency band bandwidth, and the first frequency band bandwidth represents a frequency band bandwidth corresponding to a frequency band in which the terminal operates.

14. The method according to claim 13, wherein the system bandwidth is determined based on a position of a synchronization signal block (SSB) and the first frequency band bandwidth; and/or
the available resource of the control resource set is determined based on the position of the SSB, the first frequency band bandwidth and a starting position of the control resource set.

15. The method according to claim 12, wherein the available resource of the system bandwidth and/or the available resource of the control resource set is used to determine an initial downlink bandwidth part, and the initial downlink bandwidth part is used to transmit a downlink channel/signal.

16. The method according to claim 15, wherein a bandwidth corresponding to the available resource of the control resource set is smaller than the system bandwidth, and the initial downlink bandwidth part is a bandwidth corresponding to the available resource of the control resource set.

17. The method according to any one of claims 14 to 16, wherein a frequency band bandwidth corresponding to a frequency band in which the terminal operates is a fixed bandwidth, and a first frequency band bandwidth is the frequency band bandwidth corresponding to the frequency band in which the terminal operates.

18. The method according to any one of claims 14 to 16, wherein the frequency band bandwidth corresponding to the frequency band in which the terminal operates is greater than or equal to a first threshold and less than or equal to a second threshold, and the first threshold is less than the second threshold;
a first frequency band bandwidth is the first threshold.

19. The method according to claim 18, wherein the method further comprises:
performing rate matching and resource mapping based on the first frequency band bandwidth;
sending a downlink channel/signal based on the first frequency band bandwidth.

20. The method according to claim 18, wherein the method further comprises:
performing rate matching and resource mapping according to an allocated resource corresponding to a downlink channel/signal;
sending the downlink channel/signal based on the first frequency band bandwidth, and discarding a transmission symbol mapped outside the first frequency band bandwidth.

21. The method according to claim 18, wherein the method further comprises:
performing rate matching according to an allocated resource corresponding to a downlink channel/signal and performing resource mapping based on the first frequency band bandwidth;
sending the downlink channel/signal based on the first frequency band bandwidth, and discarding a transmission symbol mapped outside the first frequency band bandwidth.

22. A communication apparatus, comprising:
a determination module, configured to, in response to determining that a bandwidth configured by a network device for a control resource set is greater than a system bandwidth, determine an available resource of the system bandwidth and/or an available resource of the control resource set;
wherein the available resource of the control resource set represents a resource in the control resource set used for transmitting a physical downlink control channel (PDCCH).

23. A communication apparatus, comprising:
a configuration module, configured to configure a bandwidth of a control resource set, wherein the bandwidth of the control resource set is greater than a system bandwidth, the bandwidth of the control resource set is used to determine an available resource of the system bandwidth and/or an available resource of the control resource set, and the available resource of the control resource set represents a resource in the control resource set used to transmit PDCCH.

24. A communication apparatus, comprising:
a processor; and
a memory for storing instructions executable by the processor;
wherein the processor is configured to: execute the method according to any one of claims 1 to 11 or any one of claims 12 to 21.

25. A storage medium, wherein instructions are stored in the storage medium, and when the instructions in the storage medium are executed by a processor of a terminal, the terminal is enabled to execute the method according to any one of claims 1 to 11; or, when the instructions in the storage medium are executed by a processor of a network device, the network device is enabled to execute the method according to any one of claims 12 to 21.

26. A communication system, comprising a terminal and a network device, wherein:
the terminal is configured to perform the method according to any one of claims 1 to 11;
the network device is configured to perform the method according to any one of claims 12 to 21.
